# EUROPEAN PATENT APPLICATION

(11) **EP 2 775 690 A1**
(43) Date of publication of application: **10.09.2014**
(21) Application number: 12865080.1
(22) Date of filing: 19.12.2012
(51) Int. Cl.: H04L 29/08, H04W 88/12

(54) **CONTENT DISTRIBUTION METHOD AND DEVICE, AND ACCESS NETWORK DEVICE**

(30) Priority: 13.01.2012 CN 201210011433
(71) Applicant: Huawei Technologies Co., Ltd, Shenzhen, Guangdong 518129 (CN)
(72) Inventor: YONG, Wenyuan, Shenzhen Guangdong 518129 (CN); LI, Xin, Shenzhen Guangdong 518129 (CN); LIU, Qiming, Shenzhen Guangdong 518129 (CN)
(74) Representative: Pfenning, Meinig & Partner GbR
(86) International application number: PCT/CN2012/086910
(87) International publication number: WO 2013/104237

(57) **Abstract**

Embodiments of the present invention relate to a content delivery method and apparatus, and an access network device. The method according to an embodiment of the present invention includes: receiving, by a cache server in an access network, a service request sent by a user equipment, where the service request contains an address of a content server in which service data requested by the user equipment is located; if the service data requested by the user equipment is stored, sending the stored service data to the user equipment through an access network device, modifying the address of the content server in the received service request into an address of the cache server in the access network, and sending the modified service request to a core network device; receiving the modified service request that is routed by the core network device to the cache server in the access network; and sending the stored service data to the cache server in the access network through the Internet, the core network device, and the access network device, and discarding, by the cache server in the access network, the service data. The technical solutions according to the embodiments of the present invention can enable the core network device to control and manage the service data requested by the user equipment.

## Description

### CROSS-REFERENCE TO RELATED APPLICATIONS

This application claims priority to Chinese Patent Application 201210011433.8, filed with the Chinese Patent Office on January 13, 2012, and entitled "CONTENT DELIVERY METHOD AND APPARATUS, AND ACCESS NETWORK DEVICE", which is incorporated herein by reference in its entirety.

### TECHNICAL FIELD

The present invention relates to the field of communications, and in particular, to a content delivery method and apparatus, and an access network device.

### BACKGROUND

A content delivery network (Content Delivery Network, CDN) is an application layer network system structure put forward to solve problems such as network congestion and bandwidth bottleneck. The content delivery network can quickly push content accessed by a user to a network edge and give a rapid response to a request of the user nearby, thereby significantly reducing the load of the network, decreasing the probability of network congestion, and shortening a request delay. To achieve the objective, a cache (Cache) server may be adopted in the content delivery network. For example, a service request of a user equipment (User Equipment, UE) is first sent to a cache server in an access network; if service data requested by the user equipment is stored in the cache server in the access network, the service data requested by the user equipment may be provided by the cache server in the access network nearby through the access network, thereby saving the bandwidth of the network and system resources of a remote content server and shortening a request delay; if the service data requested by the user equipment is not stored in the cache server in the access network, the cache server in the access network may obtain the requested service data from the content server and forward the service data to the user equipment, locally cache one copy at the same time, and when another user equipment requests the service data, send the service data to the other requesting user equipment nearby through the access network.

However, in the prior art, when the service data requested by the user equipment is stored in the cache server in the access network, the cache server in the access network provides nearby the user equipment with the service data requested by the user equipment, so that a core network device cannot control and manage the service data requested by the user equipment and also cannot implement functions such as charging or monitoring on the user equipment.

### SUMMARY

Embodiments of the present invention provide a content delivery method and apparatus, and an access network device, so that a core network device can control and manage service data requested by a user equipment.

In one aspect, a content delivery method is provided, where the method includes:
receiving, by a cache server in an access network, a service request sent by a user equipment, where the service request contains an address of a content server in which service data requested by the user equipment is located;
if the service data requested by the user equipment is stored in the cache server in the access network, sending, by the cache server in the access network, the stored service data requested by the user equipment to the user equipment through an access network device, modifying the address of the content server in the received service request into an address of the cache server in the access network, and sending the modified service request to a core network device through the access network device;
receiving, by the cache server in the access network, the modified service request that is routed by the core network device to the cache server in the access network according to the address of the cache server in the access network carried in the modified service request; and
sending, by the cache server in the access network, the stored service data requested by the user equipment to the cache server in the access network through the Internet, the core network device, and the access network device, and discarding, by the cache server in the access network, the service data.

In another aspect, a content delivery apparatus is provided, is located in an access network and includes:
a receiving unit, configured to receive a service request sent by a user equipment, where the service request contains an address of a content server in which service data requested by the user equipment is located;
a cache unit, configured to store the service data;
a sending unit, configured to, if the service data requested by the user equipment is stored in the cache unit, send the service data requested by the user equipment and stored in the cache unit to the user equipment through an access network device, modify the address of the content server in the service request received by the receiving unit into an address of the content delivery apparatus, and send the modified service request to a core network device through the access network device; where
the receiving unit is further configured to receive the modified service request that is routed by the core network device to the content delivery apparatus according to the address of the content delivery apparatus carried in the modified service request; and
the sending unit is further configured to send the service data requested by the user equipment and stored in the cache unit to the content delivery apparatus through the Internet, the core network device, and the access network device; and
a processing unit, configured to discard the service data sent by the sending unit.

In still another aspect, an access network device is provided, where the access network device includes the foregoing content delivery apparatus.

In the technical solutions provided by the embodiments of the present invention, if service data requested by a user equipment is stored in a cache server in an access network, the stored service data requested by the user equipment is sent to the user equipment through an access network device, an address of the content server in the received service request is modified into an address of the cache server in the access network, and the modified service request is sent to a core network device; after the modified service request that is routed by the core network device to the cache server in the access network is received, the stored service data is sent to the cache server in the access network through the Internet, the core network device, and the access network device, and the service data is discarded, so that the core network device can implement management and control on the service data requested by the user equipment, when the cache server in the access network provides the service data for the user equipment through the access network device, so as to implement functions such as charging or monitoring on the user equipment.

### BRIEF DESCRIPTION OF DRAWINGS

FIG. 1 is a flow chart of a content delivery method according to a first embodiment of the present invention;
FIG. 2 is a flow chart of a content delivery method according to a second embodiment of the present invention;
FIG. 3 is a flow chart of a content delivery method according to a third embodiment of the present invention;
FIG. 4 is a schematic structural diagram of a content delivery apparatus according to an embodiment of the present invention;
FIG. 5 is a schematic structural diagram of a sending unit in a content delivery apparatus according to an embodiment of the present invention;
FIG. 6 is a schematic structural diagram of another sending unit in a content delivery apparatus according to an embodiment of the present invention; and
FIG. 7 is a schematic structural diagram of an access network device according to an embodiment of the present invention.

### DESCRIPTION OF EMBODIMENTS

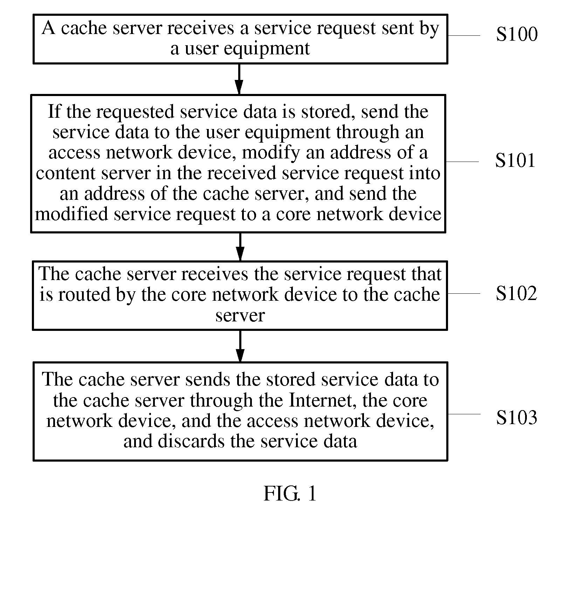

FIG. 1 is a flow chart of a content delivery method according to a first embodiment of the present invention. The method according to the embodiment includes:
S 100: A cache server in an access network receives a service request sent by a user equipment, where the service request contains an address of a content server in which service data requested by the user equipment is located.

Specifically, for example, the service request may request a web service, for example, access a web page, audio or video, and the like, and definitely, the service request may also request another type of service, which is not limited in the embodiment of the present invention. The content server may be, for example, located in the Internet (Internet), and store service data to be accessed by a user. The address of the content server may be a public address (Public Address).
S101: If the service data requested by the user equipment is stored in the cache server in the access network, the cache server in the access network sends the stored service data requested by the user equipment to the user equipment through an access network device, modifies the address of the content server in the received service request into an address of the cache server in the access network, and sends the modified service request to a core network device through the access network device.

Specifically, for example, a part of service data may be stored in the cache server in the access network; if the stored service data contains the service data requested by the user equipment, the cache server in the access network sends the stored service data requested by the user equipment to the user equipment through the access network device, modifies the address of the content server contained in the received service request into the address of the cache server in the access network, and sends the modified service request to the core network device through the access network device. The address of the cache server in the access network may be, for example, a public address.

Optionally, before the stored service data requested by the user equipment is sent to the user equipment through the access network device, a service request response may be sent to the user equipment.
S102: The cache server in the access network receives the modified service request that is routed by the core network device to the cache server in the access network according to the address of the cache server in the access network carried in the modified service request.

Specifically, for example, after receiving the modified service request, the core network device routes the modified service request to the cache server in the access network according to the address of the cache server in the access network carried in the modified service request. The routing process may be, for example, a process in which the modified service request is routed to the cache server in the access network through the Internet.

Optionally, after the cache server in the access network receives the modified service request that is routed by the core network device to the cache server in the access network, the cache server in the access network may further send a service request response to the cache server in the access network through the Internet, the core network, and the access network device.

Optionally, if in S101, the service request response may be sent to the user equipment, the cache server in the access network may copy the service request response sent to the user equipment, and sends the copied service request response to the cache server in the access network through the Internet, the core network device, and the access network device.
S103: The cache server in the access network sends the stored service data requested by the user equipment to the cache server in the access network through the Internet, the core network device, and the access network device, and the cache server in the access network discards the service data.

Specifically, the cache server in the access network sends the stored service data requested by the user equipment to the cache server in the access network through the Internet, the core network device, and the access network device, that is, the cache server in the access network sends the service data to the cache server in the access network via the Internet, the core network device, and the access network device in sequence. For example, the stored service data requested by the user equipment may be sent to the cache server in the access network through connections between the cache server in the access network, the Internet, the core network device, the access network device and the cache server in the access network, and for example, the connections may be transmission control protocol (Transmission Control Protocol, TCP) connections or user-defined connections, which are not limited in the embodiment of the present invention. For another example, the cache server in the access network may also copy the service data sent to the user equipment, and send the copied service data to the cache server in the access network through the Internet, the core network device, and the access network device, and in this case, no connection needs to be established.

Optionally, if in S 102, the cache server in the access network copies the service request response sent to the user equipment, and sends the copied service request response to the cache server in the access network through the Internet, the core network device, and the access network device, the cache server in the access network discards the service request response. The cache server in the access network may also discard the received routed modified service request.

The embodiment of the present invention may be applied in a variety of communication networks, and for example, may be applied in networks such as a global system of mobile communication (Global System of Mobile communication, GSM), a universal mobile telecommunications system (Universal Mobile Telecommunications System, UMTS), a long term evolution (Long Term Evolution, LTE) system, and a wireless local area network (Wireless Local Area Networks, WLAN). In addition, the cache server in the access network may be set independently, and may also be located in an access network device; by taking a UMTS network as an example, a cache server in an access network may be set independently, and may also be located in an access network device of the UMTS network, for example, a radio network controller (Radio Network Controller, RNC); the corresponding core network device may be, for example, a gateway GPRS support node (Gateway GPRS Support Node, GGSN), a broadband remote access server (Broadband Remote Access Server, BRAS), or another device with functions of data routing as well as control and management, and the details are not described herein again.

In the method according to the first embodiment of the present invention, if service data requested by a user equipment is stored in a cache server in an access network, the stored service data requested by the user equipment is sent to the user equipment through an access network device, an address of a content server in the received service request is modified into an address of the cache server in the access network, and the modified service request is sent to a core network device; after the modified service request that is routed by the core network device to the cache server in the access network is received, the stored service data is sent to the cache server in the access network through the Internet, the core network device, and the access network device, and the service data is discarded, so that the core network device can implement management and control on the service data requested by the user equipment, when the cache server in the access network provides the service data for the user equipment through the access network device, so as to implement functions such as charging or monitoring on the user equipment.

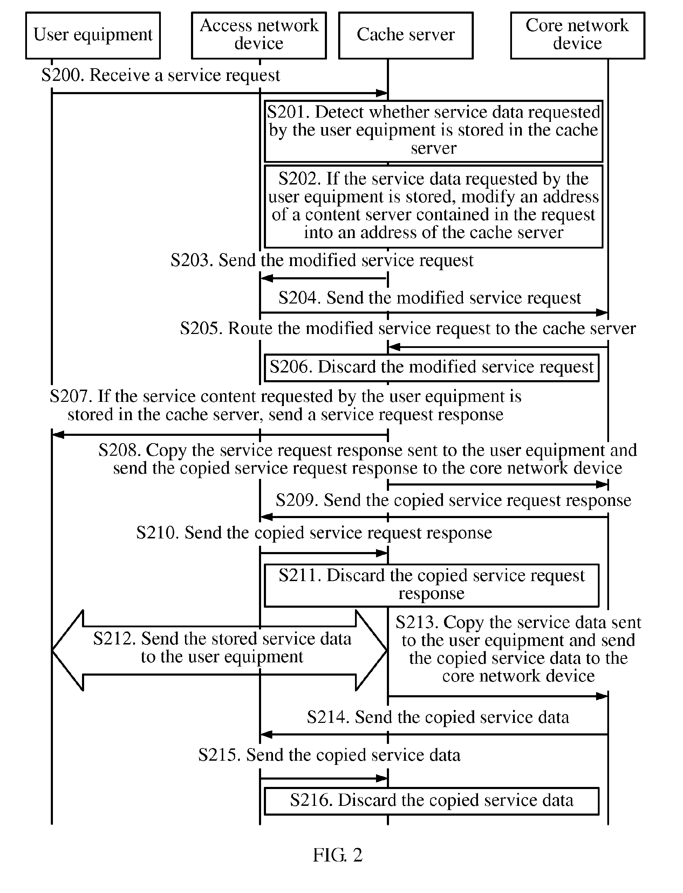

FIG. 2 is a flow chart of a content delivery method according to a second embodiment of the present invention. The method according to this embodiment includes:
S200: A cache server in an access network receives a service request sent by a user equipment.

Specifically, the cache server in the access network may receive a service request sent by the user equipment through an access network device, where for example, the service request may contain an address of a content server in which service data requested by the user equipment is located. The service request, for example, may request a web service, for example, access a web page, audio or video, and the like, and definitely, the service request may also request another type of service, which is not limited in the embodiment of the present invention. The content server may be, for example, located in the Internet, and store service data to be accessed by a user. The address of the content server may be a public address.
S201: The cache server in the access network detects whether the service data requested by the user equipment is stored in the cache server in the access network; if yes, perform S202; and if not, send the service request to a core network device through the access network device; the core network device routes the service request to the content server through the Internet, and the content server provides the requested service data for the user equipment through the Internet, the core network device, and the access network device.
S202: The cache server in the access network modifies the address of the content server contained in the service request into an address of the cache server in the access network.

Specifically, for example, the address of the content server may be modified into a public address of the cache server in the access network.
S203-204: The cache server in the access network sends the modified service request to the core network device through the access network device.

Specifically, the cache server in the access network may send the modified service request to the access network device (S203). The access network device then sends the received modified service request to the core network device (S204), for example, through an interface between the access network device and the core network device.
S205: The core network device routes the modified service request to the cache server in the access network. Specifically, for example, the core network device may route, through the Internet, the modified service request to the cache server in the access network according to the address of the cache server in the access network carried in the modified service request.
S206: The cache server in the access network discards the modified service request.
S207: If the service data requested by the user equipment is stored, the cache server in the access network sends a service request response to the user equipment through the access network device.
S208-S210: The cache server in the access network copies the service request response sent to the user equipment, and sends the copied service request response to the cache server in the access network through the Internet, the core network device, and the access network device.

Specifically, the cache server in the access network may send the copied service request response to the core network device, for example, the cache server in the access network may send the copied service request response to the core network device through the Internet (S208). After receiving the copied service request response, the core network device may send the copied service request response to the access network device (S209). The access network device sends the copied service request response to the cache server in the access network (S210).
S211: The cache server in the access network discards the copied service request response.

It should be noted that steps S207 to S211 are optional steps.
S212: The cache server in the access network sends the stored service data to the user equipment through the access network device.
S213-S215: The cache server in the access network copies the service data sent to the user equipment, and sends the copied service data to the cache server in the access network through the Internet, the core network device, and the access network device.

Specifically, the cache server in the access network sends the copied service data to the core network device through the Internet (S213). After receiving the copied service data, the core network device sends the copied service data to the access network device (S214). The access network device sends the copied service data to the cache server in the access network (S215). In this case, connections do not need to be established between the cache server in the access network, the Internet, the core network device, the access network device and the cache server in the access network, which may save system resources compared with a case that a connection is established.
S216: The cache server in the access network discards the copied service data.

The embodiment of the present invention may be applied in a variety of communication networks, and for example, may be applied in networks such as a global system of mobile communication (Global System of Mobile communication, GSM), and a universal mobile telecommunications system (Universal Mobile Telecommunications System, UMTS), a long term evolution (Long Term Evolution, LTE) system, a wireless local area network (Wireless Local Area Network, WLAN). In addition, a cache server in an access network may be set independently, and may also be located in an access network device; by taking a UMTS network as an example, a cache server in an access network may be set independently, and may also be located in an access network device of the UMTS network, for example, a radio network controller (Radio Network Controller, RNC); the corresponding core network device may be, for example, a gateway GPRS support node (Gateway GPRS Support Node, GGSN), a broadband remote access server (Broadband Remote Access Server, BRAS), or another device with functions of data routing as well as control and management, and the details are not described herein again.

In the method according to the second embodiment of the present invention, if service data requested by a user equipment is stored in a cache server in an access network, the stored service data requested by the user equipment is sent to the user equipment through an access network device, an address of a content server in the received service request is modified into an address of the cache server in the access network, and the modified service request is sent to a core network device; after the modified service request that is routed by the core network device to the cache server in the access network is received, the service data sent to the user equipment is copied, the copied service data is sent to the cache server in the access network through the Internet, the core network device, and the access network device, and the copied service data is discarded, so that the core network device can implement management and control on the service data requested by the user equipment when the cache server in the access network provides the service data for the user equipment through the access network device, so as to implement functions such as charging or monitoring on the user equipment.

It should be noted that, for the foregoing method embodiments, to make the description simple, the foregoing method embodiments are described as a series of combined actions; but persons skilled in the art should know that the present invention is not limited by the described sequences of actions, because some steps may be performed in another sequence or performed at the same time, for example, S207 and S202 may also be performed at the same time, or S207 is performed before S202. Also, persons skilled in the art should also know that all the embodiments described in the specification are preferred embodiments and the involved actions may not be required by the present invention.

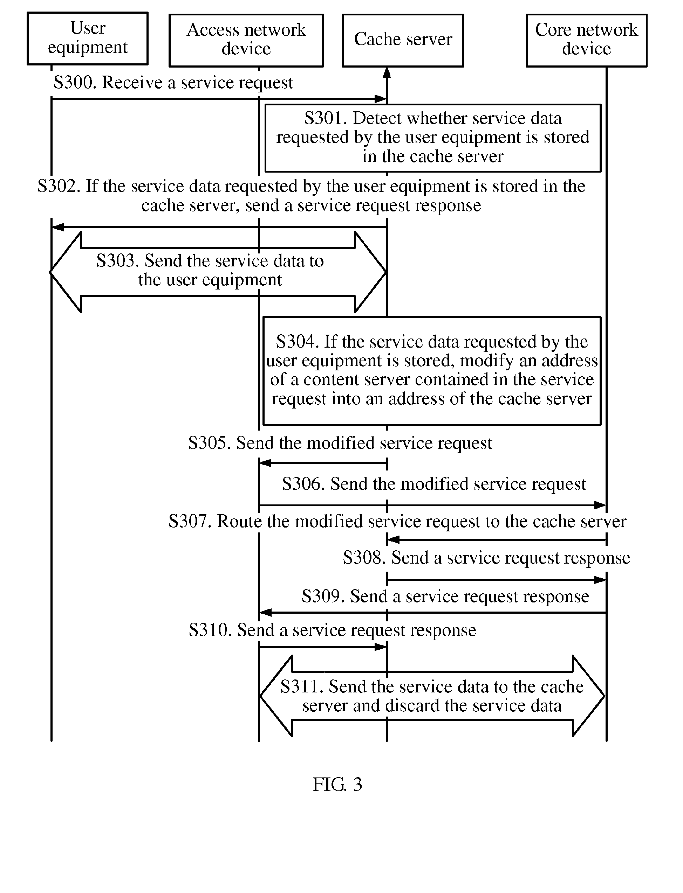

FIG. 3 is a flow chart of a content delivery method according to a third embodiment of the present invention. The method according to the embodiment includes:
S300: A cache server in an access network receives a service request sent by a user equipment.

Specifically, the cache server in the access network may receive a service request sent by the user equipment through an access network device, for example, the service request may contain an address of a content server in which service data requested by the user equipment is located. The service request, for example, may request a web service, for example, access a web page, audio or video, and the like, and definitely, the service request may also request another type of service, which is not limited in the embodiment of the present invention. The content server may be, for example, located in the Internet, and store service data to be accessed by a user. The address of the content server may be a public address.
S301: The cache server in the access network detects whether the service data requested by the user equipment is stored in the cache server in the access network; if yes, perform S302; and if not, send the service request to a core network device through the access network device; the core network device routes the service request the content server through the Internet, and the content server provides the requested service data for the user equipment through the Internet, the core network device, and the access network device.
S302: The cache server in the access network sends a service request response to the user equipment. For example, the cache server in the access network may send the service request response to the user equipment through the access network device.
S303: The cache server in the access network sends service data to the user equipment. For example, the cache server in the access network may send the service data to the use equipment nearby through the access network device, that is, provides the requested service data for the user equipment nearby, that is, directly from the access network, and does not need to access a content server in the Internet through the core network device, thereby saving bandwidth of the network and system resources of the content server and shortening the request delay.
S304: If the service data requested by the user equipment is stored, the cache server in the access network modifies an address of the content server contained in the received service request into an address of the cache server in the access network.

Specifically, for example, the address of the content server may be modified into a public address of the cache server in the access network.
S305-306: The cache server in the access network sends the modified service request to the core network device through the access network device.

Specifically, the cache server in the access network may send the modified service request to the access network device (S305). The access network device then sends the received modified service request to the core network device (S306), for example, through an interface between the access network device and the core network device.
S307: The core network device routes the modified service request to the cache server in the access network. Specifically, for example, the core network device may route, through the Internet, the modified service request to the cache server in the access network according to the address of the cache server in the access network carried in the modified service request.
S308-S310: The cache server in the access network sends a service request response to the cache server in the access network through the Internet, the core network device, and the access network device.

Specifically, the cache server in the access network may send the service request response to the core network device, for example, the cache server in the access network may send the service request response to the core network device through the Internet (S308). After receiving the service request response, the core network device may send the service request response to the access network device (S309). The access network device sends the service request response to the cache server in the access network (S310). The service request response in S308-S310 may be sent through connections between the cache server in the access network, the Internet, the core network device, the access network device and the cache server in the access network.
S311: The cache server in the access network sends the service data requested by the user equipment and stored in the cache server in the access network to the cache server in the access network through the Internet, the core network device, and the access network device, and the cache server in the access network discards the received service data.

Specifically, the cache server in the access network sends the service data to the cache server in the access network through the Internet, the core network device, and the access network device, that is, the cache server in the access network sends the service data to the cache server in the access network via the Internet, the core network device, and the access network device in sequence. For example, the service data may be sent through connections between the cache server in the access network, the Internet, the core network device, the access network device and the cache server in the access network. For example, the connections may be transmission control protocol (Transmission Control Protocol, TCP) connections or user-defined connections, which is not limited in the embodiment of the present invention. The reliability of the transmission can be ensured by sending the service data through the connections.

The embodiment of the present invention may be applied in a variety of communication networks, and for example, may be applied in networks such as a global system of mobile communication (Global System of Mobile communication, GSM), a universal mobile telecommunications system (Universal Mobile Telecommunications System, UMTS), a long term evolution (Long Term Evolution, LTE) system, and a wireless local area network (Wireless Local Area Network, WLAN). In addition, a cache server in an access network may be set independently, and may also be located in an access network device; by taking a UMTS network as an example, a cache server in an access network may be set independently, and may also be located in an access network device of the UMTS network, for example, a radio network controller (Radio Network Controller, RNC); the corresponding core network device may be, for example, a gateway GPRS support node (Gateway GPRS Support Node, GGSN), a broadband remote access server (Broadband Remote Access Server, BRAS), or another device with functions of data routing as well as control and management, and the details are not described herein again.

In the method according to the third embodiment of the present invention, if service data requested by a user equipment is stored in a cache server in an access network, the stored service data requested by the user equipment is sent to the user equipment through an access network device, an address of a content server in the received service request is modified into an address of the cache server in the access network, and the modified service request is sent to a core network device; after the modified service request that is routed by the core network device to the cache server in the access network is received, the stored service data requested by the user equipment is sent to the cache server in the access network through the Internet, the core network device, and the access network device, and the received service data is discarded, so that the core network device can implement management and control on the service data requested by the user equipment when the cache server in the access network provides the service data for the user equipment through the access network device, so as to implement functions such as charging or monitoring on the user equipment.

It should be noted that, for the foregoing method embodiments, to make the description simple, the foregoing method embodiments are described as a series of combined actions; but persons skilled in the art should know that the present invention is not limited by the described sequences of actions, because some steps may be performed in another sequence and or performed at the same time, for example, S303 may also be performed after S304 is performed. Also, persons skilled in the art should also know that the embodiments described in the specification are preferred embodiments and the involved actions may be not essential in the present invention, for example, step S302 is optional, so S303 may be performed directly after S301. For another example, steps S308-S310 are also optional, so S311 may be performed directly after S307.

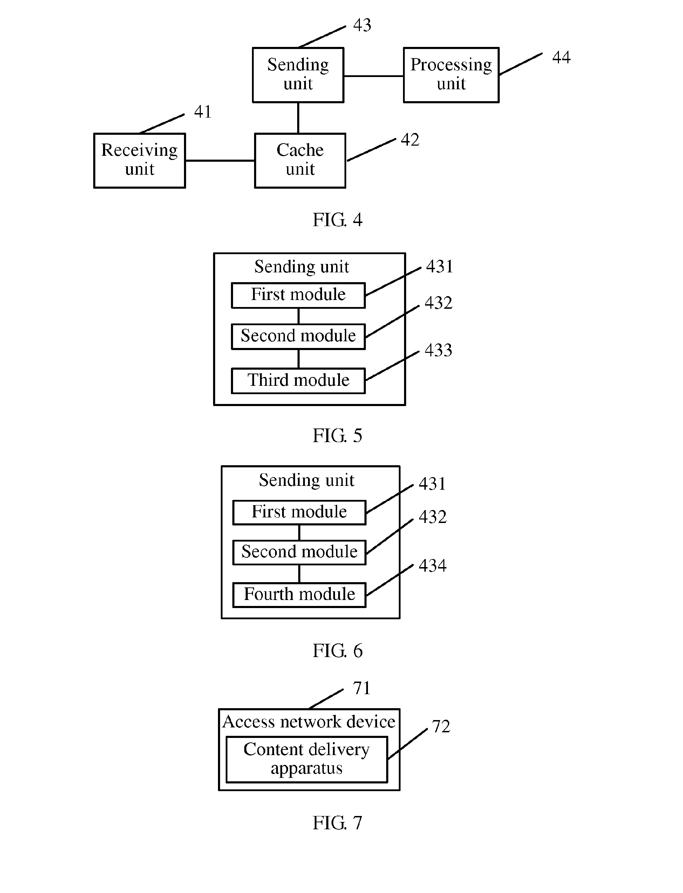

FIG. 4 is a schematic structural diagram of a content delivery apparatus according to the present invention. The content delivery apparatus according to this embodiment may be located in an access network, and may include a receiving unit 41, a cache unit 42, a sending unit 43, and a processing unit 44.

The receiving unit 41 is configured to receive a service request sent by a user equipment, where the service request contains an address of a content server in which service data requested by the user equipment is located. Specifically, for example, the service request may request a web service, for example, access a web page, audio or video, and the like, and definitely, the service request may also request another type of service, which is not limited in the embodiment of the present invention. The content server may be, for example, located in the Internet (Internet), and store service data to be accessed by a user. The address of the content server may be a public address (Public Address).

The cache unit 42 is configured to store service data.

The sending unit 43 is configured to, if the service data requested by the user equipment is stored in the cache unit 42, send the service data requested by the user equipment and stored in the cache unit 42 to the user equipment through an access network device, modify the address of the content server in the service request received by the receiving unit 41 into an address of the content delivery apparatus, and send the modified service request to a core network device through the access network device. Specifically, the address of the content delivery apparatus may be, for example, a public address.

The receiving unit 41 is further configured to receive the modified service request that is routed by the core network device to the content delivery apparatus according to the address of the content delivery apparatus carried in the modified service request. The routing process may be, for example, a process of being routed to the content delivery apparatus through the Internet.

The sending unit 43 is further configured to send the service data requested by the user equipment and stored in the cache unit 42 to the content delivery apparatus through the Internet, the core network device, and the access network device. Specifically, the sending unit 32 sends the service data to the content delivery apparatus through the Internet, the core network device, and the access network device, that is, the sending unit 43 sends the service data to the content delivery apparatus via the Internet, the core network device, and the access network device in sequence. For example, the sending unit 43 may send the stored service data requested by the user equipment to the content delivery apparatus through connections between the content delivery apparatus, the Internet, the core network device, the access network device and the content delivery apparatus, and for example, the connections may be TCP connections or user-defined connections, which is not limited in the embodiment of the present invention. For another example, the sending unit 43 may also copy the service data sent to the user equipment, and send the copied service data to the content delivery apparatus through the Internet, the core network device, and the access network device, and in this case, no connection needs to be established.

The processing unit 44 is configured to discard the service data sent by the sending unit 43.

The content delivery apparatus provided by the embodiment of the present invention may be applied in a variety of communication networks, and for example, may be applied in networks such as a global system of mobile communication (Global System of Mobile communication, GSM), a universal mobile telecommunications system (Universal Mobile Telecommunications System, UMTS), a long term evolution (Long Term Evolution, LTE) system, and a wireless local area network (Wireless Local Area Network, WLAN). In addition, a content delivery apparatus may be set independently, and may also be located in an access network device; by taking a UMTS network as an example, a content delivery apparatus may be set independently, and may also be located in an access network device of the UMTS network, for example, a radio network controller (Radio Network Controller, RNC); the corresponding core network device may be, for example, a gateway GPRS support node (Gateway GPRS Support Node, GGSN), a broadband remote access server (Broadband Remote Access Server, BRAS), or another device with functions of data routing as well as control and management, and the details are not described herein again.

Optionally, as shown in FIG. 5, the sending unit 43 may include a first module 431, a second module 432, and a third module 433.

The first module 431 is configured to, if the service data requested by the user equipment is stored in the cache unit 42, send the service data requested by the user equipment and stored in the cache unit 42 to the user equipment through the access network device.

The second module 432 is configured to, if the service data requested by the user equipment is stored in the cache unit 42, modify the address of the content server in the service request received by the receiving unit 41 into the address of the content delivery apparatus, and send the modified service request to the core network device through the access network device.

The third module 433 is configured to, if the service data requested by the user equipment is stored in the cache unit 42, send the service data requested by the user equipment and stored in the cache unit 42 to the content delivery apparatus through the connections between the content delivery apparatus, the Internet, the core network device, the access network device and the content delivery apparatus. For example, the connections may be TCP connections or user-defined connections, which is not limited in the embodiment of the present invention. The reliability of the transmission can be ensured by sending the service data through the connections.

Optionally, the first module 431 may be further configured to, before the service data stored in the cache unit 42 is sent to the user equipment through the access network device, send a service request response to the user equipment through the access network device.

Optionally, after the receiving unit 41 receives the modified service request that is routed by the core network device to the content delivery apparatus, the third module 433 may be further configured to send the service request response to the content delivery apparatus through the connections between the content delivery apparatus, the Internet, the core network device, the access network device and the content delivery apparatus.

Optionally, as shown in FIG. 6, the sending unit 43 may include the first module 431, the second module 432, and a fourth module 434.

The first module 431 is configured to, if the service data requested by the user equipment is stored in the cache unit 42, send the service data requested by the user equipment and stored in the cache unit 42 to the user equipment through the access network device.

The second module 432 is configured to, if the service data requested by the user equipment is stored in the cache unit 42, modify the address of the content server in the service request received by the receiving unit 41 into the address of the content delivery apparatus, and send the modified service request to the core network device through the access network device.

The fourth module 434 is configured to, if the service data requested by the user equipment is stored in the cache unit 42, copy the service data sent to the user equipment by the first module 431, and send the copied service data to the content delivery apparatus through the Internet, the core network device, and the access network device. By copying the data, no connection needs to be established, which may save system resources compared with a case that a connection is established.

Optionally, when the sending unit 43 includes the first module 431, the second module 432, and the fourth module 434, the processing unit 44 may be further configured to discard the received modified service request.

Optionally, when the sending unit 43 includes the first module 431, the second module 432, and the fourth module 434, the first module 431 may be further configured to, before the service data stored in the cache unit 42 is sent to the user equipment through the access network device, send the service request response to the user equipment through the access network device; the fourth module 434 may be further configured to copy the service request response sent to the user equipment, and send the copied service request response to the content delivery apparatus through the Internet, the core network device, and the access network device; and the processing unit 44 may be further configured to discard the copied service request response.

The content delivery apparatus provided by the embodiment of the present invention: if service data requested by a user equipment is stored, sends the stored service data requested by the user equipment to the user equipment through an access network device, modifies an address of a content server in the received service request into an address of the content delivery apparatus, and sends the modified service request to a core network device; and after receiving the modified service request that is routed by the core network device to the content delivery apparatus, sends the stored service data to the content delivery apparatus through the Internet, the core network device, and the access network device, and discards the service data, so that the core network device can implement management and control on the service data requested by the user equipment when the content delivery apparatus provides the service data for the user equipment through the access network device, so as to implement functions such as charging or monitoring on the user equipment.

FIG. 7 is a schematic structural diagram of an access network device according to an embodiment of the present invention, and the access network device 71 includes the content delivery apparatus 72 according to the embodiments shown in FIG. 4 to FIG. 6. For details about the content delivery apparatus 72, reference may be made to the descriptions about the embodiments shown in FIG. 4 to FIG. 6 and the details are not described again.

The access network device provided by the embodiment of the present invention: if service data requested by a user equipment is stored, sends the stored service data requested by the user equipment to the user equipment through an access network device, modifies an address of a content server in a received service request into an address of a content delivery apparatus, and sends the modified service request to a core network device; and after receiving the modified service request that is routed by the core network device to the content delivery apparatus, sends the stored service data to the content delivery apparatus through the Internet, the core network device, and the access network device, and discards the service data, so that the core network device can implement management and control on the service data requested by the user equipment when the access network device provides the user equipment with the service data stored in the access network device, so as to implement functions such as charging or monitoring on the user equipment.

Persons skilled in the art can clearly understand that, for the purpose of convenient and brief description, for detailed working processes of the content delivery apparatus described in the foregoing embodiments of the content delivery apparatus and the access network device described in the foregoing embodiments of the access network device, reference may be made to the corresponding processes in the foregoing method embodiments, and the details are not be described herein again.

In the foregoing embodiments, the description in each embodiment has its own focus. For the part that is not described in a certain embodiment, reference may be made to relevant descriptions in other embodiments. All the embodiments may also be combined to obtain new embodiments, which are not described herein.

Through the description of the foregoing embodiments, persons skilled in the art can clearly understand that the present invention may be implemented by software plus a necessary hardware platform, and definitely may also be implemented by hardware, but in most cases, the former is a preferred implementation manner. Based on such understanding, the technical solutions of the present invention essentially, or the part contributing to the prior art may be implemented in the form of a software product. The computer software product is stored in a storage medium, such as a ROM/RAM, a magnetic disk, and an optical disk, and includes several instructions for instructing a computer device (which may be a personal computer, a server, or a network device) to perform the methods provided in each embodiment of the present invention or the methods described in certain parts of the embodiments.

The foregoing description merely discloses several embodiments of the present invention and definitely cannot be used to limit the scope of the claims of the present invention. Therefore, equivalent changes made according to the claims of the present invention still fall within the scope of the present invention.

## Claims

1. A content delivery method, comprising:
receiving, by a cache server in an access network, a service request sent by a user equipment, wherein the service request contains an address of a content server in which service data requested by the user equipment is located;
if the service data requested by the user equipment is stored in the cache server in the access network, sending, by the cache server in the access network, the stored service data requested by the user equipment to the user equipment through an access network device, modifying the address of the content server in the received service request into an address of the cache server in the access network, and sending the modified service request to a core network device through the access network device;
receiving, by the cache server in the access network, the modified service request that is routed by the core network device to the cache server in the access network according to the address of the cache server in the access network carried in the modified service request; and
sending, by the cache server in the access network, the stored service data requested by the user equipment to the cache server in the access network through the Internet, the core network device, and the access network device, and discarding, by the cache server in the access network, the service data.

2. The content delivery method according to claim 1, wherein the sending, by the cache server in the access network, the stored service data requested by the user equipment to the cache server in the access network through the Internet, the core network device, and the access network device comprises:
sending the stored service data requested by the user equipment to the cache server in the access network through connections between the cache server in the access network, the Internet, the core network device, the access network device and the cache server in the access network.

3. The content delivery method according to claim 2, wherein the connections are a transmission control protocol TCP connections or user-defined connections.

4. The content delivery method according to claim 2, wherein after the receiving, by the cache server in the access network, the modified service request that is routed by the core network device to the cache server in the access network, the method further comprises:
sending, by the cache server in the access network, a service request response to the cache server in the access network through the Internet, the core network device, and the access network device.

5. The content delivery method according to claim 1, wherein the sending, by the cache server in the access network, the stored service data requested by the user equipment to the cache server in the access network through the Internet, the core network device, and the access network device comprises:
copying, by the cache server in the access network, the service data sent to the user equipment, and sending the copied service data to the cache server in the access network through the Internet, the core network device, and the access network device.

6. The content delivery method according to claim 5, wherein after the receiving, by the cache server in the access network, the modified service request that is routed by the core network device to the cache server in the access network, the method further comprises: discarding the modified service request.

7. The content delivery method according to claim 5, wherein before the sending, by the cache server in the access network, through the access network device, the stored service data requested by the user equipment, the method further comprises: sending, by the cache server in the access network, a service request response to the user equipment through the access network device; copying, by the cache server in the access network, the service request response sent to the user equipment, and sending the copied service request response to the cache server in the access network through the Internet, the core network device, and the access network device.

8. The content delivery method according to claim 7, wherein the method further comprises:
discarding the copied service request response.

9. The content delivery method according to any one of claims 1 to 8, wherein the cache server in the access network is located in the access network device.

10. The content delivery method according to any one of claims 1 to 8, wherein the address of the cache server in the access network is a public address.

11. The content delivery method according to any one of claims 1 to 8, wherein the method further comprises: after the cache server in the access network receives the service request sent by the user equipment, detecting whether the service data requested by the user equipment is stored.

12. A content delivery apparatus, located in an access network and comprising:
a receiving unit, configured to receive a service request sent by a user equipment, wherein the service request contains an address of a content server in which service data requested by the user equipment is located;
a cache unit, configured to store the service data;
a sending unit, configured to, if the service data requested by the user equipment is stored in the cache unit, send the service data requested by the user equipment and stored in the cache unit to the user equipment through an access network device, modify the address of the content server in the service request received by the receiving unit into an address of the content delivery apparatus, and send the modified service request to a core network device through the access network device; wherein
the receiving unit is further configured to receive the modified service request that is routed by the core network device to the content delivery apparatus according to the address of the content delivery apparatus carried in the modified service request;
the sending unit is further configured to send the service data requested by the user equipment and stored in the cache unit to the content delivery apparatus through the Internet, the core network device, and the access network device; and
a processing unit, configured to discard the service data sent by the sending unit.

13. The content delivery apparatus according to claim 12, wherein the sending unit comprises:
a first module, configured to, if the service data requested by the user equipment is stored in the cache unit, send the service data requested by the user equipment and stored in the cache unit to the user equipment through the access network device;
a second module, configured to, if the service data requested by the user equipment is stored in the cache unit, modify the address of the content server in the service request received by the receiving unit into the address of the content delivery apparatus, and send the modified service request to the core network device through the access network device; and
a third module, configured to, if the service data requested by the user equipment is stored in the cache unit, send the service data requested by the user equipment and stored in the cache unit to the content delivery apparatus through connections between the content delivery apparatus, the Internet, the core network device, the access network device and the content delivery apparatus.

14. The content delivery apparatus according to claim 13, wherein the connections are a transmission control protocol TCP connections or user-defined connections.

15. The content delivery apparatus according to claim 13, wherein after the receiving unit receives the modified service request that is routed by the core network device to the content delivery apparatus, the third module is further configured to send a service request response to the content delivery apparatus through the connections between the content delivery apparatus, the Internet, the core network device, the access network device and the content delivery apparatus.

16. The content delivery apparatus according to claim 12, wherein the sending unit comprises:
a first module, configured to, if the service data requested by the user equipment is stored in the cache unit, send the service data requested by the user equipment and stored in the cache unit to the user equipment through the access network device;
a second module, configured to, if the service data requested by the user equipment is stored in the cache unit, modify the address of the content server in the service request received by the receiving unit into the address of the content delivery apparatus, and send the modified service request to the core network device through the access network device; and
a fourth module, configured to, if the service data requested by the user equipment is stored in the cache unit, copy the service data sent to the user equipment by the first module, and send the copied service data to the content delivery apparatus through the Internet, the core network device, and the access network device.

17. The content delivery apparatus according to claim 16, wherein after the receiving unit receives the modified service request that is routed by the core network device to the content delivery apparatus, the processing unit is further configured to discard the received modified service request.

18. The content delivery apparatus according to claim 16, wherein the first module is further configured to, before the service data stored in the cache unit is sent to the user equipment through the access network device, send a service request response to the user equipment through the access network device; the fourth module is further configured to copy the service request response sent to the user equipment, and send the copied service request response to the content delivery apparatus through the Internet, the core network device, and the access network device; and the processing unit is further configured to discard the copied service request response.

19. The content delivery apparatus according to any one of claims 12 to 18, wherein the content delivery apparatus is located in the access network device.

20. The content delivery apparatus according to any one of claims 12 to 18, wherein the address of the content delivery apparatus is a public address.

21. An access network device, comprising the content delivery apparatus of any one of claims 12 to 20.
